# EUROPÄISCHE PATENTSCHRIFT

(11) **EP 1 743 909 B1**
(45) Veröffentlichungstag und Bekanntmachung des Hinweises auf die Patenterteilung: **07.05.2008**
(21) Anmeldenummer: 06014098.5
(22) Anmeldetag: 07.07.2006
(51) Int. Cl.: C08F 8/44, C08F 283/00

(54) **Extrudat mit Beschichtung**
Extrudate containing a coating
Extrudate contenant un revetement

(30) Priorität: 13.07.2005 DE 102005032618
(43) Veröffentlichungstag der Anmeldung: 17.01.2007
(73) Patentinhaber: REHAU AG + Co, 95111 Rehau (DE)
(72) Erfinder: Steffl, Udo, 95466 Weidenberg (DE); Griebel, Dragan, 95111 Rehau (DE)

(56) Entgegenhaltungen:
- EP-A2- 1 026 700
- DE-A1- 19 709 465

## Beschreibung

Die vorliegende Erfindung betrifft ein Kunststoffextrudat mit einer Beschichtung.

Kunststoffextrudate aus dem Elektronik-, Elektro-, Möbel-, Medizin-, Fahrzeug- oder Baubereich wie Kantenbänder, Sockelleisten, Schrankrollladenprofile, Wandanschlussprofile oder Schläuche sind bekannt. Kantenbänder aus Kunststoff zur Verwendung als Kantenumleimer sind z.B. in der DE 8605651 U1 beschrieben. Sie dienen zum Schutz der Kanten von Möbelbauplatten genauso wie zur Dekoration. Als Kunststoffe finden dabei insbesondere Polyvinylchlorid (PVC), Polypropylen (PP), Acrylnitril-Butadien-Styrol (ABS) oder Polyester Einsatz. Thermoplastische Kantenbänder kommen an Büro-, Küchen-, Wohn- und Badezimmermöbeln, insbesondere an Fronten, Arbeitsplatten, Korpussen, Einlegeböden und Wangensystemen zum Einsatz und erfordern deshalb einen hohen Widerstand - insbesondere auf ihrer Oberfläche - gegen Verkratzung, Abrieb oder Beschädigung, auch durch spitze, scharfe Gegenstände. Diesen leisten die heute verfügbaren Kantenbänder aus thermoplastischen Polymeren nicht oder nur ungenügend.

Zum Oberflächenschutz und zur Versiegelung werden die Kunststoffextrudate deshalb in üblicher Weise auf der Oberfläche mit einer Klarlackschicht versehen. Thermisch härtende Klarlacke weisen zwar ein gutes Leistungsspektrum auf, der Vernetzungsprozess ist jedoch aufgrund der langen Trocknungszeiten energie- und kostenintensiv und wenig für den industriellen Einsatz gerade im Hinblick auf hohe Fertigungsgeschwindigkeiten tauglich.
Auch UV-vernetzbare Klarlacke sind bekannt und finden Einsatz z.B. bei der Beschichtung von Parkettböden.
Auch werden Kantenbänder beispielsweise bedruckt, um die Optik der Möbelbauplatte abzubilden, und dann mit einer UV-vernetzbaren Klarlackschicht oberflächlich versiegelt.
Einer der wichtigsten Vorteile des UV-vernetzbaren Klarlackes, im Vergleich zum thermisch härtenden Lack, ist die höhere Vernetzungsgeschwindigkeit, verbunden mit wirtschaftlichen Vorteilen.

Aus der EP 1 026 700 A2 ist eine halogenfreie Kabelummantelung für Drähte und Lichtkabel bekannt, die sich dadurch auszeichnet, dass sie aus einem halogenfreien Thermoplasten oder Elastomeren, einer intumeszierenden Komponente und einem organischen Glasbildner, der im Brandfall einen feuerbeständigen anorganischen Schaumstoff ausbildet, bestehen.
Die Kabelummantelung kann dabei insbesondere durch die Zugabe von Peroxiden oder hydrolisierbaren Silanverbindungen vernetzt sein.

Die Schrift DE 197 09 465 A1 lehrt, ein Verfahren zur Herstellung von kratzfesten Beschichtungen derart zu gestalten, dass Beschichtungsmittel eingesetzt werden, die nach Aushärtung einen bestimmten Speichermodul E im gummielastischen Bereich und einen bestimmten Verlustfaktor tanδ aufweisen, als Bindemittel ein oder mehrere Polyacrylatharze mit einer bestimmten Hydroxylzahl, einer bestimmten Säurezahl und einem bestimmten zahlenmittleren Molekulargewicht, sowie als Vernetzer ein oder mehrere freie oder blockierte Isocyanate und oder mit den Hydroxylgruppen des Bindemittels unter Ether- und / oder Esterbildung vernetzende Komponenten auf Triazinbasis enthalten.

Aufgabe der vorliegenden Erfindung ist es daher, ein beschichtetes thermoplastisches Extrudat zur Verfügung zu stellen, welches die genannten Nachteile nicht aufweist. Eine weitere Aufgabe stellt sich hinsichtlich der Angabe des Verfahrens, das Extrudat mit einer Beschichtung zu versehen.

Erfindungsgemäß gelingt die Lösung der Aufgabe durch eine Beschichtung des thermoplastischen Extrudates mit einem UV-härtenden Lack, der sich insbesondere durch eine hohe Kratzbeständigkeit auszeichnet - mit einer Mikrohärte von größer 200 N/mm² nach DIN EN ISO 14577 und der Eigenschaft, bei einer dynamischen Ritzprüfung mit einem Stahlrad bis 20 N Krafteinwirkung mit Ritzgeschwindigkeit von 2 bis 3 cm/s und einem Ritzweg von 22,5 mm keine sichtbaren Kratzer aufweist - sowie ihrer Fähigkeit die Oberfläche nach der Strahlenhärtung zu versiegeln.

Die Lösung der Aufgabe erfolgt durch eine widerstandsfähige, in gewisser Weise glasähnliche Beschichtung der thermoplastischen Extrudate nach den Merkmalen des Anspruchs 1, das Verfahren, ein Extrudat mit der Beschichtung zu versehen, erfolgt gemäß Anspruch 10.

Bevorzugte Ausführungen und Weiterbildungen der Erfindung sind in den Unteransprüchen ausgeführt.

Die Zusammensetzung für die Beschichtung besteht aus mindestens fünf Komponenten (A), (B), (C), (D) und (E).

Überraschenderweise führt die erfindungsgemäße Auswahl der Komponenten (A) bis (E) als Beschichtungszusammensetzung bei Einhaltung der beschriebenen definierten Verfahrensschritte zur Beschichtung zu einem überlegenden Eigenschaftsbild, wie es in der Aufgabenstellung und den Beispielen formuliert ist.

Die erfindungsgemäßen Kunststoffextrudate mit einer sehr widerstandsfähigen, glasähnlichen Beschichtung in einer Schichtdicke von 8 bis 40 µm weisen eine Mikrohärte von größer 200 N/mm² nach DIN EN ISO 14577 auf, weiterhin zeigen Sie bei dynamischen Ritzprüfungen mit einem Ritzhärteprüfer nach Clemen eine exzellente Widerstandsfähigkeit, indem bei einer Krafteinwirkung von 20 N mit einem Stahlrad bei einer Ritzgeschwindigkeit von 2 bis 3 cm/s und einem Ritzweg von 22,5 mm keine sichtbaren Kratzer hinterlassen werden.

Im Folgenden wird die Erfindung näher erläutert.

Komponente (A) der Zusammensetzung für die Beschichtung der Kunststoffextrudate ist ein Polyacrylat, ausgewählt aus der Gruppe Epoxydacrylat, Polyesteracrylat, Polyetheracrylat, Polyurethanacrylat, Silikonacrylat oder ein ungesättigtes Acrylatharz.

Komponente (B) der Zusammensetzung für die Beschichtung der Kunststoffextrudate ist ein Füllstoff, ausgewählt aus der Gruppe, welche umfasst Siliciumdioxid, Aluminiumoxid, Zirkoniumdioxid, Titandioxid oder Cerdioxid.
Besonders bevorzugt sind amorphe SiO₂-Partikel mit einer Oberfläche gemessen nach DIN ISO 9277 von 50 bis 300 m²/g und einer mittleren Teilchengröße von 20 bis 200 nm. Ganz besonders bevorzugt sind Abmischungen aus amorphen SiO₂-Partikel mit einer Oberfläche gemessen nach DIN ISO 9277 von 50 bis 200 m²/g und einer mittleren Teilchengröße von 30 bis 100 nm und synthetischem Korund mit einer mittleren Teilchengröße von 1 bis 5 µm. Der Gewichtsanteil der Komponenten (B), bezogen auf die Komponente (A), kann zwischen 0,1 und 80 Teilen betragen.

Komponente (C) der Zusammensetzung für die Beschichtung der Kunststoffextrudate ist ein reaktiver Verdünner, ausgewählt aus der Gruppe Monoacrylsäurester oder Acrylsäureester von Polyolen.
Der Gewichtsanteil der Komponente (C), bezogen auf die Komponente (A), kann zwischen 0,1 und 100 Teilen betragen.
Besonders bevorzugt sind polyfunktionelle Acrylester von Polyalkoholen wie Hexadioldiacrylat oder Trimethylolpropantriacrylat oder Pentaerythrittri- und/oder -tetraacrylat oder Acrylester mehrfunktioneller Polyetheralkohole wie Diethylenglykol- oder Dipropylenglykoldiacrylat, die Acrylsäureester von ethoxylierten Glycerin oder Trimethylpropan oder Ditrimethylpropan oder Pentaerythritol und Dipentaerythritol.

Komponente (D) der Zusammensetzung für die Beschichtung der Kunststoffextrudate ist ein Vinylsilan, ausgewählt aus der Gruppe Vinyltrimethoxysilan, Vinyltriethoxysilan, 3-Aminopropyltrimethoxysilan, 3-Aminopropyltriethoxysilan, Vinyltris(2-methoxyethoxy)silan, Oligomeren von Vinyltrimethoxysilan, Oligomeren von Vinyltriethoxysilan oder 3-Glycidoxypropyltrimethoxysilan oder 3-Glycidoxypropyltriethoxysilan.
Der Gewichtsanteil der Komponente (D), bezogen auf die Komponente (A), kann zwischen 0,1 und 50 Teilen betragen.

Komponente (E) der Zusammensetzung für die Beschichtung der Kunststoffextrudate ist ein Photoinitiator, ausgewählt aus der Gruppe 2-Hydroxy-2-methyl-1-phenyl-propan-1-on oder 1-Hydroxy-cyclohexylphenylketon oder 2,4,6-Trimethylbenzoylphenylphosphorsäureethylester.
Der Gewichtsanteil der Komponente (E), bezogen auf die Komponente (A), kann zwischen 0,1 und 5 Teilen, vorzugsweise zwischen 2 bis 3 Teilen, betragen.

Die Zusammensetzung für die Beschichtung der Kunststoffextrudate kann gegebenenfalls bis zu 200 Gewichtsanteilen Zusätze, bezogen auf Komponente (A), zusätzlich enthalten, in Form von Wasser, Katalysatoren wie Dicarbonsäuren, Stabilisatoren, organischen Lösemitteln, Pigmenten, Rheologieadditiven, Entschäumern, Entlüftern, Verdickungsmitteln, Thixotropierungsmitteln, Lichtschutzmitteln, Netz- und Dispergiermitteln, Mattierungsmitteln wie Polyethylenwachsen oder weitere Füllstoffe wie Ruße, Glimmer, Kreide, Dolomit, Kieselsäuren, Talkum, Kaolin, Schwerspat.

Die Mischung der Komponenten (A) bis (E) für die Zusammensetzung der Beschichtung kann auf konventionelle Art und Weise über ein kontinuierliches oder diskontinuierliches Verfahren (Batch-Verfahren) in Standardmisch- oder Dispergieraggregaten erfolgen.

Die Oberfläche der Kunststoffextrudate wird gegebenenfalls zur Verbesserung der Haftfestigkeit der glasähnlichen Beschichtung vorbehandelt. Dies kann durch einen physikalischen oder chemischen Aktivierungsprozess wie Beflammen, Plasmaverfahren, CoronaEntladung, Fluorierung oder Ätz- oder Beizvorgang mittels organischen und/oder anorganischen Chemikalien erfolgen.
Mitunter kann die Lackhaftung durch den Einsatz eines Haftvermittlers bzw. eines Haftprimers soweit verbessert werden, dass auf eine Vorbehandlung verzichtet werden kann. Gegebenenfalls sind jedoch ein Verfahren zur Vorbehandlung und ein Haftprimer zu kombinieren.

Die Applikation der Zusammensetzung für die Beschichtung erfolgt durch Streichen, Rollen, Ziehen, Wischen, Gießen, Walzen, Tauchen, Trommeln, Fluten, Spritzen oder Sprühen. Besonders bevorzugt ist die Walztechnik im Gegenlaufverfahren (Reversverfahren), bei dem die Auftragswalze entgegen der Bewegungsrichtung des Kunststoffextrudats rotiert.

Die so applizierte Zusammensetzung für die Beschichtung wird dann mittels Ultraviolettstrahlung innerhalb von 0,1 bis 5 s gehärtet, indem die absorbierte Strahlungsenergie die radikalische Polymerisation der Komponenten (A) und (C) über Komponente (E) und in Gegenwart der Komponenten (B) und (D) auslöst. Dabei kommen Quecksilber-Niederdruck und Hochdruckstrahler zum Einsatz.

Die Schichtstärke der Beschichtung beträgt 8 bis 40 µm, bevorzugt 10 bis 20 µm.

Die erfindungsgemäßen Kunststoffextrudate mit der widerstandsfähigen, glasähnlichen Beschichtung werden bevorzugt im Elektronik-, Elektro-, Möbel-, Fahrzeug-, Medizin- oder Baubereich als Kantenbänder, Sockelleisten, Schrankrollladenprofile, Wandanschlussprofile, Brüstungskanäle, Kabelkanäle, Fensterinnenbänke, Fensterbauprofile, transparente Formteile und Schläuche, Rohre und Profile, die in der Anwendung bzw. im Gebrauch einem besonderen Verschleiß unterliegen, verwendet.

Die folgenden Beispiele gemäß Tabelle 1 erläutern die vorliegende Erfindung, ohne jedoch darauf beschränkt zu sein.

### Ausführungsbeispiele:

Die aufgeführten Zusammensetzungen der Beschichtung sind für drei Beispiele (Beispiel 1, Beispiel 2, Beispiel 3) in Gewichtsanteilen, bezogen auf 100 Gewichtsanteile der Komponente (A), angegeben.

**Tabelle 1**

| **Beispiele** | **Beispiel 1** | **Beispiel 2** | **Beispiel 3** |
|---|---|---|---|
| Komponente A | 100 Polyurethan-acrylat [1] | 100 Polyurethan-acrylat [2] | 100 Polyurethan-acrylat [3] |
| Komponente B | 60 SiO₂-Partikel [4] | 40 SiO₂-Partikel [4] und 2 Al₂O₃ [5] | 50 SiO₂-Partikel [6] und 4 Al₂O₃ [5] |
| Komponente C | 33 Dioldiacrylat [7] | 33 Dioldiacrylat [8] | 33 Dioldiacrylat [7] |
| Komponente D | 30 Vinylsilan [9] | 30 Vinylsilan [9] | 30 Vinylsilan [10] |
| Komponente E | 2 Photoinitiator [11] | 3 Photoinitiator [12] 1 Photoinitiator [13] | 5 Photoinitiator [11] |
| Viskosität (20 °C, 6 mm) DIN ISO 2431 | 9 s | 10 s | 12 s |

Hierbei bedeuten:
- [1]: hexafunktionales aliphatisches Urethanacrylat (Ebecryl EB 1290 von Firma UCB Chemicals)
- [2]: bifunktionales aromatisches Urethanacrylat (Laromer 8983 von Firma BASF)
- [3]: Gemisch aus aliphatischem Urethanhexaacrylat und Pentaerythritoltriacrylat oder - tetraacrylat (CAS: 3524-68-3)
- [4]: amorphe SiO₂-Partikel mit einer Oberfläche gemessen nach DIN ISO 9277 von 200 m²/g und einer mittleren Teilchengröße von 30 nm
- [5]: synthetischer Korund mit einer mittleren Teilchengröße von 3 µm
- [6]: amorphe SiO₂-Partikel mit einer Oberfläche gemessen nach DIN ISO 9277 von 50 m²/g und einer mittleren Teilchengröße von 30 nm
- [7]: 1,6-Hexandioldiacrylat (CAS: 13048-33-4)
- [8]: Dipropylenglycoldiacrylat (CAS: 57472-68-1)
- [9]: Gemisch aus Oligomeren von Vinyltrimethoxysilan
- [10]: Vinyltrimethoxysilan (CAS: 78-08-0)
- [11]: 2-Hydroxy-2-methyl-1-phenyl-propan-1-on (CAS: 7473-98-5)
- [12]: 2,4,6-Trimethylbenzoylphenylphosphorsäureethylester (CAS: 84434-11-7)
- [13]: 1-Hydroxy-cyclohexylphenylketon (CAS: 947-19-3).

Dem steht folgendes Vergleichsbeispiel gemäß Tabelle 2 gegenüber:

**Tabelle 2**

| **Vergleichsbeispiel** | |
|---|---|
| Komponente A | 100 Epoxydacrylat [1] |
| Komponente C | 40 Hexandioldiacrylat [2] und 40 Hydroxymethylpropylacrylat [3] |
| Komponente E | 2,5 Photoinitiator [4] |
| Viskosität (20 °C, 6 mm) DIN ISO 2431 | 11 s |

Hierbei bedeuten:
- [1]: Epoxydacrylat (Laromer EA 81 von Fa BASF)
- [2]: 1,6-Hexandioldiacrylat (CAS: 13048-33-4)
- [3]: 1,1,1-Trihydroxymethylpropyltriacrylat (CAS: 15625-89-5)
- [4]: 2-Hydroxy-2-methyl-1-phenyl-propan-1-on (CAS: 7473-98-5).

Die erfindungsgemäßen beschichteten Kunststoffextrudate weisen folgende Eigenschaften gemäß Tabelle 3 bezüglich Mikrohärte und Ritzbarkeit ihrer Oberfläche auf:

**Tabelle 3**

| **Eigenschaft** | **Einheit** | **Norm** | **Beispiel 1** | **Beispiel 2** | **Beispiel 3** |
|---|---|---|---|---|---|
| Mikrohärte | [N/mm²] | DIN EN ISO 14577 | 258,2 | 282,3 | 295,5 |
| Ritzen mit Stahlrad F=10 N | [mm] | Ritzbreite per Lichtmikroskop | 0 | 0 | 0 |
| Ritzen mit Stahlkugel F=10 N | [mm] | Ritzbreite per Lichtmikroskop | 0,1 | 0,1 | 0 |
| Ritzen mit Stahlstichel F=10 N | [mm] | Ritzbreite per Lichtmikroskop | 0 | 0 | 0 |
| Schichtdicke nach Härtung | [µm] | | 13 | 11 | 9 |

Demgegenüber zeigt das Vergleichsbeispiel Eigenschaften gemäß Tabelle 4:

**Tabelle 4**

| **Eigenschaft** | **Einheit** | **Norm** | **Vergleichsbeispiel** |
|---|---|---|---|
| Mikrohärte | [N/mm²] | DIN EN ISO 14577 | 148,9 |
| Ritzen mit Stahlrad F=10 N | [mm] | Ritzbreite per Lichtmikroskop | 0,18 |
| Ritzen mit Stahlkugel F=10 N | [mm] | Ritzbreite per Lichtmikroskop | 0,18 |
| Ritzen mit Stahlstichel F=10 N | [mm] | Ritzbreite per Lichtmikroskop | 0,19 |
| Schichtdicke nach Härtung | [µm] | | 10 |

Die Ritztests mit dem Ritzhärteprüfgerät nach Clemen mit einem Stahlrad, einer Stahlkugel, bzw. einem Stahlstichel als Ritzwerkzeuge werden wie folgt vorgenommen:

Die Probe wird mit Hilfe von Spannleisten auf einen beweglichen Schlitten montiert. Über diesen Schlitten befindet sich ein auf zwei Metallsäulen montierter Pendelbalken mit dem entsprechenden Ritzwerkzeug sowie dem entsprechenden Gewichtsblock. Die gewünschte Ritzkraft (1 bis 20 N) wird durch Verschieben des Gewichtsblockes auf der Skala des Pendelbalkens eingestellt. Zu Beginn der Prüfung wird das Prüfwerkzeug im Vorlauf auf die Probe abgesenkt und ritzt diese mit einer definierten Geschwindigkeit von 2 bis 3 cm/s über einen Ritzweg von 22,5 mm; der Rücklauf erfolgt mit angehobenem Prüfwerkzeug. Die Auswertung der Ritzbreite erfolgt mit Hilfe eines Lichtmikroskops.

Aus dem Vergleich der Eigenschaften der erfindungsgemäß beschichteten Kunststoffextrudate mit dem Vergleichsbeispiel wird deutlich, welche große Verbesserung hiermit bei der mechanischen Widerstandsfähigkeit, insbesondere was die Verkratzbarkeit angeht, erreicht wurde.

## Patentansprüche

1. Kunststoffextrudat mit mechanischen Eigenschaften, bestehend aus einem polymeren Substrat und einer mindestens abschnittsweise auf die Oberfläche des Extrudats aufgebrachten UV-härtbaren, vernetzbaren Beschichtung, wobei die Zusammensetzung für die UV-härtbare Beschichtung mindestens aus folgenden Komponenten besteht:
(I) 100 Gewichtsanteile einer Komponente (A) bestehend aus einem Polyacrylat;
(II) 0,1 bis 80 Gewichtsanteile einer Komponente (B), bezogen auf Komponente (A), bestehend aus Siliciumdioxid oder Aluminiumoxid oder Zirkoniumdioxid oder Titandioxid oder Cerdioxid;
(III) 0,1 bis 100 Gewichtsanteile einer Komponente (C), bezogen auf Komponente (A), bestehend aus Monoacrylsäurester oder Acrylsäureester von Polyolen;
(IV) 0,1 bis 80 Gewichtsanteile einer Komponente (D), bezogen auf Komponente (A), bestehend aus einem Vinylsilan;
(V) 0,1 bis 5 Gewichtsteile einer Komponente (E), bezogen auf Komponente (A), bestehend aus 2-Hydroxy-2-methyl-1-phenyl-propan-1-on oder 2,4,6-Trimethylbenzoylphenylphosphorsäureethylester oder 1-Hydroxy-cyclohexylphenylketon oder Gemischen aus diesen;
und eine Viskosität bei 20 °C von 8 bis 20 s nach DIN ISO 2431 aufweist und die UVgehärtete, vernetzte Beschichtung eine Schichtdicke von 8 bis 40 µm und eine Mikrohärte von größer 200 N/mm² nach DIN EN ISO 14577 besitzt und bei einer dynamischen Ritzprüfung auf einem Ritzhärteprüfer nach Clemen mit einem Stahlrad bis 20 N Krafteinwirkung mit einer Ritzgeschwindigkeit von 2 bis 3 cm/s und einem Ritzweg von 22,5 mm keine sichtbaren Kratzer zeigt.

2. Kunststoffextrudat mit mechanischen Eigenschaften nach Anspruch 1, **dadurch gekennzeichnet, dass** das Polyacrylat aus Komponente (A) bevorzugt ein Epoxydacrylat oder ein Polyesteracrylat oder ein Polyetheracrylat oder ein Polyurethanacrylat oder ein Silikonacrylat oder ein ungesättigtes Acrylatharz ist.

3. Kunststoffextrudat mit mechanischen Eigenschaften nach Anspruch 1, **dadurch gekennzeichnet, dass** der Füllstoff aus Komponente (B) bevorzugt ein Siliciumdioxid oder ein Aluminiumoxid oder ein Zirkoniumdioxid oder ein Titandioxid oder ein Cerdioxid mit einer Oberfläche gemessen nach DIN ISO 9277 von 50 bis 300 m²/g und einer mittleren Teilchengröße von 20 bis 200 nm ist.

4. Kunststoffextrudat mit mechanischen Eigenschaften nach Anspruch 1, **dadurch gekennzeichnet, dass** der reaktive Verdünner aus Komponente (C) ein Monoacrylsäurester oder ein Acrylsäureester von Polyolen ist.

5. Kunststoffextrudat mit mechanischen Eigenschaften nach Anspruch 1, **dadurch gekennzeichnet, dass** das Vinylsilan aus Komponente (D) bevorzugt ein Vinyltrimethoxysilan, Vinyltriethoxysilan, 3-Aminopropyltrimethoxysilan, 3-Aminopropyltriethoxysilan, Vinyltris(2-methoxyethoxy)silan, Oligomeres von Vinyltrimethoxysilan, Oligomeres von Vinyltriethoxysilan oder 3-Glycidoxypropyltrimethoxysilan oder 3-Glycidoxypropyltriethoxysilan ist.

6. Kunststoffextrudat mit mechanischen Eigenschaften nach Anspruch 3, **dadurch gekennzeichnet, dass** der Füllstoff aus Komponente (B) eine Abmischung von Siliciumdioxid mit Aluminiumoxid oder Zirkoniumdioxid oder Titandioxid oder Cerdioxid ist.

7. Kunststoffextrudat mit mechanischen Eigenschaften nach Anspruch 6, **dadurch gekennzeichnet, dass** die Füllstoffkombination eine Abmischung von amorphen SiO₂-Partikeln mit einer Oberfläche gemessen nach DIN ISO 9277 von 50 bis 200 m²/g und einer mittleren Teilchengröße von 30 bis 100 nm und synthetischem Korund mit einer mittleren Teilchengröße von 1 bis 5 µm ist.

8. Kunststoffextrudat mit verbesserten mechanischen Eigenschaften nach Anspruch 4, **dadurch gekennzeichnet, dass** der reaktive Verdünner bevorzugt ein polyfunktioneller Acrylester von Polyalkoholen wie Hexadioldiacrylat, Trimethylolpropantriacrylat, Pentaerythrittri- und/oder tetraacrylat oder ein Acrylester mehrfunktioneller Polyetheralkohole wie Diethylenglykol- oder Dipropylenglykoldiacrylat, die Acrylsäureester von ethoxylierten Glycerin, Trimethylpropan, Ditrimethylpropan, Pentaerythrit und Dipentaerythrit ist.

9. Kunststoffextrudat mit verbesserten mechanischen Eigenschaften nach einem der vorigen Ansprüche, **dadurch gekennzeichnet, dass** Zusätze in Form von Wasser, Katalysatoren wie Dicarbonsäuren, Stabilisatoren, UV-Photoinitiatoren, organischen Lösemitteln, Pigmenten, Rheologieadditiven, Entschäumern, Entlüftern, Verdickungsmitteln, Thixotropierungsmitteln, Lichtschutzmitteln, Netz- und Dispergiermitteln, Mattierungsmitteln wie Polyethylenwachse oder weitere Füllstoffe wie Ruße, Glimmer, Kreide, Dolomit, Kieselsäuren, Talkum. Kaolin, Schwerspatenthalten sind.

10. Verfahren zur Herstellung eines Kunststoffextrudates mit verbesserten mechanischen Eigenschaften nach den Ansprüchen 1 bis 9, **dadurch gekennzeichnet, dass** die Zusammensetzung für die Beschichtung durch Streichen, Rollen, Ziehen, Wischen, Gießen, Walzen, Tauchen, Trommeln, Fluten, Spritzen oder Sprühen auf das Kunststoffextrudat aufgebracht wird.

11. Verfahren zur Herstellung eines Kunststoffextrudates mit mechanischen Eigenschaften nach Anspruch 10, **dadurch gekennzeichnet, dass** die Zusammensetzung für die Beschichtung mittels einer Walztechnik im Gegenlaufverfahren (Reversverfahren) aufgebracht wird, bei dem die Auftragswalze entgegen der Bewegungsrichtung des Kunststoffextrudats rotiert.

12. Verfahren zur Herstellung eines Kunststoffextrudates mit mechanischen Eigenschaften nach Anspruch 10 oder 11, **dadurch gekennzeichnet, dass** die Beschichtung in einer Schichtstärke von 8 bis 40 µm, bevorzugt 10 bis 20 µm, aufgebracht wird.

13. Kunststoffextrudat mit mechanischen Eigenschaften nach einem der Ansprüche 1 bis 9 zur Anwendung in den Bereichen Elektronik, Elektrotechnik, Möbelbau, Medizintechnik, Fahrzeugtechnik oder Bautechnik.

14. Kunststoffextrudat mit mechanischen Eigenschaften nach Anspruch 13, umfassend Kantenbänder, Sockelleisten, Schrankrollladenprofile, Wandanschlussprofile, Brüstungskanäle, Kabelkanäle, Fensterinnenbänke, Fensterbauprofile, transparente Formteile und Schläuche, Rohre und Profile, die in der Anwendung bzw. im Gebrauch einem besonderen Verschleiß unterliegen.

## Claims

1. Plastics extrudate with improved mechanical properties, composed of a polymeric substrate and of a UV-curable, crosslinkable coating applied at least in sections to the surface of the extrudate, where the composition for the UV-curable coating is composed at least of the following components:
(I) 100 parts by weight of a component (A) composed of a polyacrylate;
(II) from 0.1 to 80 parts by weight of a component (B), based on component (A), composed of silicon dioxide or aluminium oxide or zirconium dioxide or titanium dioxide or cerium dioxide;
(III) from 0.1 to 100 parts by weight of a component (C), based on component (A), composed of monoacrylic ester or acrylic ester of polyols;
(IV) from 0.1 to 80 parts by weight of a component (D), based on component (A), composed of a vinylsilane;
(V) from 0.1 to 5 parts by weight of a component (E), based on component (A), composed of 2-hydroxy-2-methyl-1-phenylpropan-1-one or the ethyl ester of 2,4,6-trimethylbenzoylphenylphosphoric acid or 1-hydroxycyclohexyl phenyl ketone or of a mixture of these;
and has a viscosity at 20°C of from 8 to 20 s to DIN ISO 2431, and the UV-cured, crosslinked coating has a layer thickness of from 8 to 40 µm and a microhardness greater than 200 N/mm² to DIN EN ISO 14577, and exhibits no visible scratches in a dynamic scratch test on a Clemen scratch hardness tester using a steel wheel and an effective force of up to 20 N using a scratching velocity of from 2 to 3 cm/s and a scratching length of 22.5 mm.

2. Plastics extrudate with improved mechanical properties according to Claim 1, **characterized in that** the polyacrylate of component (A) is preferably an epoxy acrylate or a polyester acrylate or a polyether acrylate or a polyurethane acrylate or a silicone acrylate or an unsaturated acrylate resin.

3. Plastics extrudate with improved mechanical properties according to Claim 1, **characterized in that** the filler of component (B) is preferably a silicon dioxide or an aluminium oxide or a zirconium dioxide or a titanium dioxide or a cerium dioxide with a surface area measured to DIN ISO 9277 of from 50 to 300 m²/g and of an average particle size of from 20 to 200 nm.

4. Plastics extrudate with improved mechanical properties according to Claim 1, **characterized in that** the reactive diluent of component (C) is a monoacrylic ester or acrylic ester of polyols.

5. Plastics extrudate with improved mechanical properties according to Claim 1, **characterized in that** the vinylsilane of component (D) is preferably a vinyltrimethoxysilane, vinyltriethoxysilane, 3-aminopropyltrimethoxysilane, 3-aminopropyltriethoxysilane, vinyltris(2-methoxyethoxy)silane, oligomer of vinyltrimethoxysilane, oligomer of vinyltriethoxysilane or 3-glycidoxypropyltrimethoxysilane or 3-glycidoxypropyltriethoxysilane.

6. Plastics extrudate with improved mechanical properties according to Claim 3, **characterized in that** the filler of component (B) is a blend of silicon dioxide with aluminium oxide or zirconium dioxide or titanium dioxide or cerium dioxide.

7. Plastics extrudate with improved mechanical properties according to Claim 6, **characterized in that** the filler combination is a blend of amorphous SiO₂ particles with a surface area measured to DIN ISO 9277 of from 50 to 200 m²/g and of an average particle size of from 30 to 100 nm and synthetic corundum with an average particle size of from 1 to 5 µm.

8. Plastics extrudate with improved mechanical properties according to Claim 4, **characterized in that** the reactive diluent is preferably a polyfunctional acrylic ester of polyalcohols, e.g. hexadiol diacrylate, trimethylolpropane triacrylate, pentaerythritol tri- and/or tetraacrylate, or an acrylic ester of polyfunctional polyether alcohols, e.g. diethylene glycol diacrylate or dipropylene glycol diacrylate, the acrylic esters of ethoxylated glycerol, trimethylpropane, ditrimethylpropane, pentaerythritol and dipentaerythritol.

9. Plastics extrudate with improved mechanical properties according to any of the previous claims, **characterized in that** additions are present in the form of water, catalysts, such as dicarboxylic acids, stabilizers, UV-photoinitiators, organic solvents, pigments, rheology additives, antifoams, de-aerators, thickeners, agents with thixotropic effect, light stabilizers, wetting agents and dispersing agents, matting agents such as polyethylene waxes, or other fillers, such as carbon black, mica, chalk, dolomite, silicic acids, talc, kaolin, baryte.

10. Process for production of a plastics extrudate with improved mechanical properties according to Claims 1 to 9, **characterized in that** the composition for the coating is applied to the plastics extrudate via spreading, roller-application methods, drawing, wiping, casting, roll-application methods, dip-coating, drum-application methods, flow coating, sprinkling or spraying.

11. Process for the production of a plastics extrudate with improved mechanical properties according to Claim 10, **characterized in that** the composition for the coating is applied by means of a rolling technique by the reverse process in which the direction of rotation of the application roll is opposite to the direction of movement of the plastics extrudate.

12. Process for the production of a plastics extrudate with improved mechanical properties according to Claim 10 or 11, **characterized in that** the coating is applied in a layer thickness of from 8 to 40 µm, preferably from 10 to 20 µm.

13. Plastics extrudate with improved mechanical properties according to any of Claims 1 to 9 for application in the sectors of electronics, electrical engineering, furniture construction, medical technology, vehicle technology or construction technology.

14. Plastics extrudate with improved mechanical properties according to Claim 13, encompassing edge banding, skirting boards, cabinet-roller-shutter profiles, wall-joint profiles, dado trunking, cable trunking, interior window-sills, window profiles, transparent mouldings and hoses, pipes and profiles, which in use or in service are subject to particular wear.

## Revendications

1. Extrudat de matériau synthétique à propriétés mécaniques améliorées, constitué d'un substrat polymère et d'un revêtement réticulable durcissable aux UV appliqué au moins par sections sur la surface de l'extrudat, dans lequel la composition du revêtement durcissable aux UV est formée au moins des composants suivants:
(I) 100 parties en poids d'un composant (A) constitué d'un polyacrylate;
(II) 0,1 à 80 parties en poids d'un composant (B), par rapport au composant (A), constitué de dioxyde de silicium ou d'oxyde d'aluminium ou de dioxyde de zirconium ou de dioxyde de titane ou de dioxyde de cérium;
(III) 0,1 à 100 parties en poids d'un composant (C), par rapport au composant (A), constitué d'ester d'acide monoacrylique ou d'ester d'acide acrylique de polyols;
(IV) 0,1 à 80 parties en poids d'un composant (D), par rapport au composant (A), constitué de vinylsilane;
(V) 0,1 à 5 parties en poids d'un composant (E), par rapport au composant (A), constitué de 2-hydroxy-2-méthyl-1-phényl-propan-1-one ou d'ester éthylique d'acide 2,4,6-triméthylbenzoylphényl-phosphorique ou de 1-hydroxy-cyclohexylphényl-cétone ou de mélanges de ceux-ci;
et présente une viscosité à 20 °C de 8 à 20 s selon la norme DIN ISO 2341 et le revêtement réticulé durci aux UV possède une épaisseur de couche de 8 à 40 µm et une microdureté de plus de 200 N/mm² selon la norme DIN EN ISO 14577 et ne présente pas de rayure visible dans le cadre d'un essai dynamique de rayure sur un dispositif d'essai de dureté à la rayure selon Clemen avec une molette d'acier soumise à une force allant jusqu'à 20 N à une vitesse de rayure de 2 à 3 cm/s et sur un trajet de rayure de 22,5 mm.

2. Extrudat de matériau synthétique à propriétés mécaniques améliorées selon la revendication 1, **caractérisé en ce que** le polyacrylate du composant (A) est de préférence un acrylate d'époxyde ou un acrylate de polyester ou un acrylate de poly-éther ou un acrylate de polyuréthanne ou un acrylate de silicone ou une résine acrylate insaturée.

3. Extrudat de matériau synthétique à propriétés mécaniques améliorées selon la revendication 1, **caractérisé en ce que** la charge du composant (B) est de préférence un dioxyde de silicium ou un oxyde d'aluminium ou un dioxyde de zirconium ou un dioxyde de titane ou un dioxyde de cérium avec une surface mesurée selon la norme DIN ISO 9277 de 50 à 300 m²/g et une granulométrie moyenne de 20 à 200 nm.

4. Extrudat de matériau synthétique à propriétés mécaniques améliorées selon la revendication 1, **caractérisé en ce que** le diluant réactif du composant (C) est un ester d'acide monoacrylique ou un ester d'acide acrylique de polyols.

5. Extrudat de matériau synthétique à propriétés mécaniques améliorées selon la revendication 1, **caractérisé en ce que** le vinylsilane du composant (D) est de préférence un vinyl-triméthoxysilane, un vinyltriéthoxysilane, un 3-aminopropyltriméthoxysüane, un 3-aminopropyl-triéthoxysilane, un vinyltris(2-méthoxyéthoxy)-silane, un oligomère de vinyltriméthoxysilane, un oligomère de vinyltriéthoxysilane ou un 3-glycidoxypropyltriméthoxysilane ou un 3- glycidoxypropyltriéthoxysilane.

6. Extrudat de matériau synthétique à propriétés mécaniques améliorées selon la revendication 3, **caractérisé en ce que** la charge du composant (B) est un mélange de dioxyde de silicium avec de l'oxyde d'aluminium ou du dioxyde de zirconium ou du dioxyde de titane ou du dioxyde de cérium.

7. Extrudat de matériau synthétique à propriétés mécaniques améliorées selon la revendication 6, **caractérisé en ce que** la combinaison de charges est un mélange de particules de SiO₂ amorphes avec une surface mesurée selon la norme DIN ISO 9277 de 50 à 200 m²/g et une granulométrie moyenne de 30 à 100 nm et de corindon synthétique d'une granulométrie moyenne de 1 à 5 µm.

8. Extrudat de matériau synthétique à propriétés mécaniques améliorées selon la revendication 4, **caractérisé en ce que** le diluant réactif est de préférence un ester acrylique polyfonctionnel de polyalcools, comme le diacrylate d'hexadiol, le triacrylate de triméthylolpropane, le triacrylate et/ou le tétraacrylate de pentaérythritol, ou un ester acrylique de polyétheralcools polyfonctionnels, comme le diacrylate de diéthylèneglycol ou de dipropylèneglycol, l'ester d'acide acrylique de glycérine éthoxylée, le triméthylpropane, le ditriméthylpropane, le pentaérythritol ou le dipentaérythritol.

9. Extrudat de matériau synthétique à propriétés mécaniques améliorées selon l'une quelconque des revendications précédentes, **caractérisé en ce que** des additifs y sont contenus sous la forme d'eau, de catalyseurs tels que des acides dicarboxyliques, de stabilisateurs, de photoinitiateurs UV, de solvants organiques, de pigments, d'additifs rhéologiques, d'agents anti-mousse, de désaérants, d'épaississants, d'agents thixotropes, d'agents photoprotecteurs, d'agents de réticulation et de dispersion, d'agents de matage, comme les cires de polyéthylène, ou d'autres charges, comme la suie, le mica, la craie, la dolomite, les acides siliciques, le talc, le kaolin ou la baryte.

10. Procédé de fabrication d'un extrudat de matériau synthétique à propriétés mécaniques améliorées selon les revendications 1 à 9, **caractérisé en ce que** la composition du revêtement est appliquée sur l'extrudat de matériau synthétique par enduction, au rouleau, par filage, par essuyage, par coulée, par laminage, par immersion, par passage au tambour, par injection, par pulvérisation ou par aspersion.

11. Procédé de fabrication d'un extrudat de matériau synthétique à propriétés mécaniques améliorées selon la revendication 10, **caractérisé en ce que** la composition du revêtement est appliquée au moyen d'une technique de laminage dans un procédé à contre-courant (procédé réversible), dans lequel le cylindre d'application est soumis à une rotation à l'encontre du sens de déplacement de l'extrudat de matériau synthétique.

12. Procédé de fabrication d'un extrudat de matériau synthétique à propriétés mécaniques améliorées selon la revendication 10 ou 11, **caractérisé en ce que** le revêtement est appliqué sur une épaisseur de couche de 8 à 40 µm, de préférence de 10 à 20 µm.

13. Extrudat de matériau synthétique à propriétés mécaniques améliorées selon l'une quelconque des revendications 1 à 9 pour application dans les secteurs de l'électronique, de l'électrotechnique, de l'ameublement, de la technique médicale, de la technique d'outillage ou de la technique de la construction.

14. Extrudat de matériau synthétique à propriétés mécaniques améliorées selon la revendication 13, comprenant des alèses de chants, des plinthes, des profilés de volets roulants d'armoires, des profilés de prises de courant murales, des canaux d'appui, des canaux pour câbles, des banquettes internes de fenêtres, des profilés de fenêtres, des pièces moulées transparentes et des tuyaux, des tubes et des profilés, qui subissent une usure particulière dans l'application ou en cours d'usage.
